# EUROPÄISCHE PATENTSCHRIFT

(11) **EP 1 711 560 B1**
(45) Veröffentlichungstag und Bekanntmachung des Hinweises auf die Patenterteilung: **29.08.2007**
(21) Anmeldenummer: 05700964.9
(22) Anmeldetag: 15.01.2005
(51) Int. Cl.: C08L 77/00, C08L 77/02, C08L 77/06, C08L 51/00, C08L 51/04, C08L 55/02, C08L 25/08, C08L 25/10, C08L 25/12, C08L 25/14

(54) **THERMOPLASTISCHE FORMMASSEN AUF BASIS VON STYROLCOPOLYMEREN UND POLYAMIDEN**
THERMOPLASTIC MOULDING MASSES MADE FROM STYROL COPOLYMERS AND POLYAMIDES
MATIERES A MOULER THERMOPLASTIQUES A BASE DE COPOLYMERES STYRENE ET DE POLYAMIDES

(30) Priorität: 27.01.2004 DE 102004004230
(43) Veröffentlichungstag der Anmeldung: 18.10.2006
(73) Patentinhaber: BASF Aktiengesellschaft, 67056 Ludwigshafen (DE)
(72) Erfinder: WEBER, Martin, 67487 Maikammer (DE); GOTTSCHALK, Axel, 67435 Neustadt (DE); HAENSEL, Werner, 67360 Lingenfeld (DE); HECKMANN, Walter, 69469 Weinheim (DE); HÖNL, Hans, 67271 Obersülzen (DE); MOSBACH, Norbert, 67133 Maxdorf (DE); NEVOIGT, Ralf, 03229 Altdoebern (DE); HEYMANN, Wolfgang, 01987 Schwarzheide (DE)
(86) Internationale Anmeldenummer: PCT/EP2005/000380
(87) Internationale Veröffentlichungsnummer: WO 2005/071013

(56) Entgegenhaltungen:
- WO-A-01/16230
- US-A- 5 270 353
- US-A1- 2003 036 586

## Beschreibung

Die vorliegende Erfindung betrifft thermoplastische Formmassen aus
A) einem Polyamid mit Amino- oder Carboxylendgruppen oder einer Mischung dieser Endgruppen,
B) einer Mischung aus mindestens zwei Pfropfcopolymeren, jeweils enthaltend einen Kautschuk als Pfropfgrundlage und eine Pfropfauflage auf der Basis eines ungesättigten Monomeren, die sich in ihren Kautschukgehalten um mindestens 5 Gew.-% voneinander unterscheiden,
C) ein kautschukfreies Copolymer enthaltend,
   c1) mindestens 30 Gew.-% Einheiten, die sich von einem vinylaromatischen Monomeren ableiten, bezogen auf das Gesamtgewicht aller Einheiten, die C) enthält,
   c2) Einheiten, die sich von einem Monomeren ableiten, das eine funktionelle Gruppe enthält, die mit den Endgruppen des Polyamides A) reagieren kann und
   c3) Einheiten, die sich von einem Monomeren ableiten, das keine funktionellen Gruppen enthält, die mit den Endgruppen des Polyamides A) reagieren,
   sowie darüber hinaus gewünschtenfalls
D) ein kautschukfreies Matrixpolymer,
E) eine niedermolekulare Verbindung, die eine Dicarbonsäureanhydridgruppe enthält und
F) einen oder eine Mischung unterschiedlicher Zusatzstoffe.

Darüber hinaus betrifft die vorliegende Erfindung Verfahren zur Herstellung dieser Formmassen. Des Weiteren betrifft die vorliegende Erfindung die Verwendung dieser Formmassen zur Herstellung von Formteilen, Folien, Fasern oder Schäumen. Formteile, Folien Fasern oder Schäume, die aus diesen Formmassen erhältlich sind, sind ebenfalls von dieser Erfindung umfasst. Weitere Ausführungsformen der vorliegenden Erfindung sind den Ansprüchen, der Beschreibung und den Beispielen zu entnehmen. Es versteht sich, dass die vorstehend genannten und die nachstehend noch zu erläuternden Merkmale der erfindungsgemäßen Formmassen nicht nur in der jeweils angegebenen Kombination, sondern auch in anderen Kombinationen verwendbar sind, ohne den Rahmen der Erfindung zu verlassen.

Blends, die Polyamid und Kunststoffe des ABS-Typs enthalten, sind bekannt. Bekannt ist ferner, dass man derartige Blends mit Polymeren, die funktionelle Gruppen aufweisen, die mit den Endgruppen des Polyamides reagieren können, mischen kann. Diese Polymeren wirken verträglichkeitsvermittelnd zwischen der Polyamidphase und der Phase, die die Kunststoffe des ABS-Typs bilden. Dadurch werden die Eigenschaften der Blends verbessert, insbesondere werden die Schlagzähigkeiten wesentlich erhöht.

Blends dieser Art sind unter anderem aus der EP-A 202 214, EP-A 402528 und EP-A 784 080 bekannt. Aus diesen Schriften gehen Blends hervor, die jeweils einen Pfropfkautschuk enthalten, der durch seinen Kautschukanteil sowie z.B. durch seinen Gelgehalt, sein Molekulargewicht und seine Teilchengröße näher beschrieben ist. Gemäß EP-A 784 080 darf der Kautschuk des Pfropfcopolymeren keine Gruppen aufweisen, die mit den Endgruppen des Polyamides reagieren können.

Aus der EP-A 220 155 gehen Blends hervor, die neben dem Polyamid, der verträglichkeitsvermittelnden Komponente und dem Pfropfkautschuk zum Zwecke der weiteren Verbesserung der Schlagzähigkeit einen säurehaltigen Acrylatcopolymerkautschuk enthalten.

Sollen Formteile aus Kunststoffen in Apparaten eingesetzt werden, die bewegliche Teile enthalten, die Vibrationen hervorrufen, wird häufig beobachtet, dass von den Kunststoffteile unangenehme Geräusche ausgehen. Es besteht insbesondere auf dem Gebiet der Fahrzeugherstellung das besondere Problem der Geräuschdämmung im Zusammenhang mit dem Einsatz von Kunststoffteilen. Daher war es Aufgabe der vorliegenden Erfindung, ausgehend von den bekannten Blends und unter Beibehaltung der von diesen bekannten guten mechanischen Eigenschaften, Formmassen zu finden, die sich durch gute Reibungseigenschaften auszeichnen, wodurch sich durch Vibrationen hervorgerufene Geräusche, insbesondere Quietschgeräusche reduzieren lassen.

Demgemäss Wurden die eingangs definierten Formmassen gefunden, die außerdem gegenüber den bekannten Blends eine verbesserte Fließfähigkeit bei gleichzeitig verbesserter Kerbschlagzähigkeit aufweisen.

### Komponente A

Unter Polyamiden werden Homopolymere oder Copolymere von synthetischen langkettigen Polyamiden verstanden, die als wesentlichen Bestandteil wiederkehrend AmidGruppen in der Polymer-Hauptkette aufweisen. Beispiele solcher Polyamide sind Nylon 6 (Polycaprolactam), Nylon 6,6 (Polyhexamethylenadipamid), Nylon 4,6 (Polytetramethylenadipamid), Nylon 6,10 (Polyhexamethylensebacinamid), Nylon 7 (Polyenantholactam), Nylon 11 (Polyundecanolactam), Nylon 12 (Polydodecanolactam). Diese Polyamide tragen bekanntermaßen den generischen Namen Nylon.

Die Herstellung von Polyamiden kann prinzipiell nach zwei Verfahren erfolgen.

Bei der Polymerisation aus Dicarbonsäuren und Diaminen, wie auch bei der Polymerisation aus Aminosäuren reagieren die Amino- und Carboxyl-Endgruppen der Ausgangsmonomere oder Ausgangsoligomere miteinander unter Bildung einer Amid-Gruppe und Wasser. Das Wasser kann anschließend von der Polymermasse entfernt werden. Bei der Polymerisation aus Carbonsäureamiden reagieren die Amino- und Amid-Endgruppen der Ausgangsmonomere oder Ausgangsoligomere miteinander unter Bildung einer Amid-Gruppe und Ammoniak. Der Ammoniak kann anschließend von der Polymermasse entfernt werden.

Als Ausgangsmonomere oder Ausgangsoligomere zur Herstellung von Polyamiden eignen sich beispielsweise
(1) C₂- bis C₂₀ -, vorzugsweise C₃- bis C₁₈- Aminosäuren, wie 6-Aminocapronsäure, 11-Aminoundecansäure, sowie deren Dimere, Trimere, Tetramere, Pentamere oder Hexamere,
(2) C₂ - bis C₂₀ - Aminosäureamiden, wie 6-Aminocapronsäureamid, 11-Aminoundecansäureamid sowie deren Dimere, Trimere, Tetramere, Pentamere oder Hexamere,
(3) Umsetzungsprodukte von
   (3a) C₂ - bis C₂₀-, vorzugsweise C₂ - bis C₁₂ - Alkyldiaminen, wie Tetramethylendiamin oder vorzugsweise Hexamethylendiamin, mit
   (3b) einer C₂ - bis C₂₀ -, vorzugsweise C₂ - bis C₁₄ -aliphatischen Dicarbonsäure, wie Sebacinsäure, Decandicarbonsäure oder Adipinsäure, sowie deren Dimere, Trimere, Tetramere, Pentamere oder Hexamere,
(4) Umsetzungsprodukte von (3a),
   mit
   (4b) einer C₈ - bis C₂₀ -, vorzugsweise C₈ - bis C₁₂ -aromatischen Dicarbonsäure oder deren Derivate, beispielsweise Chloride, wie 2,6-Naphthalindicarbonsäure, vorzugsweise Isophthalsäure oder Terephthalsäure,
   sowie deren Dimere, Trimere, Tetramere, Pentamere oder Hexamere,
(5) Umsetzungsprodukte von (3a)
   mit
   (5b) einer C₉ - bis C₂₀ -, vorzugsweise C₉ - bis C₁₈ -arylaliphatischen Dicarbonsäure oder deren Derivate, beispielsweise Chloride, wie o-, m- oder p-Phenylendiessigsäure, sowie deren Dimere, Trimere, Tetramere, Pentamere oder Hexamere,
(6) Umsetzungsprodukte von
   (6a) C₆ - bis C₂₀ -, vorzugsweise C₆ - bis C₁₀ - aromatischen Diamin, wie m- oder p-Phenylendiamin, mit (3b),
   sowie deren Dimere, Trimere, Tetramere, Pentamere oder Hexamere,
(7) Umsetzungsprodukte von
   (7a) C₇ - bis C₂₀ -, vorzugsweise C₈ - bis C₁₈ -arylaliphatischen Diaminen, wie m-oder p-Xylylendiamin, mit (3b),
   sowie deren Dimere, Trimere, Tetramere, Pentamere oder Hexamere,
(8) Monomere oder Oligomere eines C₂ - bis C₂₀ - vorzugsweise C₂ - bis C₁₈ - arylaliphatischen oder vorzugsweise aliphatischen Lactams , wie Enantholactam, Undecanolactam, Dodecanolactam oder Caprolactam,
sowie Homopolymere, Copolymere oder Mischungen solcher Ausgangsmonomere oder Ausgangsoligomere.

Bevorzugt sind dabei solche Ausgangsmonomere oder Ausgangsoligomere, die bei der Polymerisation zu den Polyamiden Nylon 6, Nylon 6,6, Nylon 4,6, Nylon 6,10, Nylon 7, Nylon 11, Nylon 12, insbesondere zu Nylon 6 und Nylon 66, führen. Es können auch Mischungen aus zwei oder mehr dieser Polyamide als Komponente A) verwendet werden.

Ganz besonders bevorzugt wird als Polyamid A) wird Nylon 6 eingesetzt.

Die Endgruppen des Polyamides A) sind erfindungsgemäß Amino- oder Carboxylendgruppen oder eine Mischung davon. Dabei ist es möglich, dass als Polyamide A) solche verwendet werden, die einen Überschuss an Aminoendgruppen aufweisen oder auch solche, die einen Überschuss an Carboxylendgruppen aufweisen. Bevorzugt werden als Polyamide A) solche, die einen Überschuss an Carboxylendgruppen haben.

Der Anteil der Komponente A) an den erfindungsgemäßen Formmassen kann in weiten Bereichen variieren. Bevorzugte erfindungsgemäße Formmassen enthalten die Komponente A) in Mengen von 5 bis 95,05, insbesondere von .7,5 bis 91,599 Gew.-%, bezogen auf das Gesamtgewicht der Formmasse. Besonders bevorzugte Formmassen enthalten von 10 bis 89,15 Gew.-%, bezogen auf das Gesamtgewicht der Formmasse an Komponente A).

### Komponente B

Erfindungsgemäß wird als Komponente B) eine Mischung aus zwei oder mehr, beispielsweise drei bis fünf unterschiedlichen Pfropfcopolymeren eingesetzt. Bevorzugt enthält die Mischung zwei unterschiedliche Pfropfcopolymere.

Die Pfropfcopolymeren enthalten jeweils einen Kautschuk als Pfropfgrundlage und eine Pfropfauflage. Hierunter soll erfindungsgemäß auch verstanden werden, dass mehrere Weich- (d.h. Kautschukphasen) und Hartphasen umfasst sein können. Die Pfropfcopolymeren unterscheiden sich erfindungsgemäß voneinander mindestens in dem Anteil an Kautschuk in Gew.-%, bezogen auf das Gesamtgewicht Pfropfcopolymer und berechnet anhand der Mengen an Einsatzstoff. Dieser Anteilsunterschied beträgt erfindungsgemäß mindestens 5 Gew.-%. Nach einer der bevorzugten Ausführungsformen beträgt der Unterschied des Kautschuksanteils mindestens 6 Gew.-%, beispielsweise von 6 bis 10 Gew.-%. Unter dem Kautschukanteil soll dabei erfindungsgemäß der gesamte Anteil an Weichphasen im jeweiligen Pfropfcopolymeren verstanden werden.

Die Pfropfcopolymeren können ansonsten den gleichen Aufbau haben. Sie können aber auch auf Kautschuken verschiedener monomerer Zusamensetzung basieren oder eine unterschiedliche Pfropfauflage haben. Des Weiteren ist es möglich, dass sie sowohl eine unterschiedliche Pfropfgrundlage als auch eine unterschiedliche Pfropfauflage aufweisen, beispielsweise eine unterschiedliche Abfolge an Weich- und Hartphasen haben oder auf unterschiedlichen monomeren Bausteinen beruhen.

Prinzipiell sind als Pfropfgrundlage alle Kautschuke geeignet, die eine Glasübergangstemperatur von 0°C (ermittelt nach DIN 53765) oder darunter aufweisen. Die Kautschuke können unterschiedlichster Natur sein. Beispielsweise können Silikon-, Olefin, wie Ethylen-, Propylen-, Ethylen/Propylen-, EP(D)M-, Blockkautschuke wie Styrol/Ethylen/Butadien/Styrol (SEBS) Kautschuke, Dien-, Acrylat-, Ethylenvinylacetat-, oder Ethylenbutylacrylat-Kautschuke eingesetzt werden.

Bevorzugte Silikonkautschuke enthalten als organische Reste mindestens 80 mol-% Methylgruppen. Endgruppe ist im allgemeinen eine Diorganyl-hydroxysiloxy-Einheit, vorzugsweise eine Dimethylhydroxysiloxy-Einheit. Besonders bevorzugt werden vernetzte Silikonkautschuke als Pfropfgrundlage c1) eingesetzt. Diese können z.B. dadurch hergestellt werden, dass in einer ersten Stufe Silanmonomere wie Dimethyldichlorsilan, Vinylmethyldichlorsilan oder Dichlorsilane mit anderen Substituenten zu cyclischen Oligomeren umgesetzt werden. In einer weiteren Stufe können aus den cyclischen Oligomeren unter Zugabe von Vernetzungsmitteln wie Mercaptopropyl-methyldimethoxysilan durch ringöffnende Polymerisation vernetzte Silikonkautschuke erhalten werden. Im Allgemeinen beträgt der Teilchendurchmesser der Silikonkautschuke (Gewichtsmittelwert d₅₀) von 0,09 bis 1*µ*m, bevorzugt von 0,09 bis 0,4 *µ*m (bestimmt gemäß W. Scholtan und H. Lange, Kolloid-Z. und Z.-Polymere 250 (1972), Seiten 782-796, mittels Ultrazentrifuge).

Die als Pfropfgrundlage geeigneten EP(D)M-Kautschuke sind Co- oder Terpolymere, die mindestens ein Ethylen und ein Propylen aufweisen und bevorzugt eine geringe Anzahl an Doppelbindungen, d.h. weniger als 20 Doppelbindungen pro 1000 C-Atome aufweisen. Die Terpolymeren enthalten in der Regel mindestens 30 Gew.-% Einheiten, die sich von Ethylen und mindestens 30 Gew.-% Einheiten, die sich von Propylen abhalten die Terpolymeren in der Regel Diolefine mit mindestens fünf C-Atomen. Verfahren zu Ihrer Herstellung sind an sich bekannt. In der Regel weisen die EP(D)M-Kautschuke Teilchendurchmesser (Gewichtsmittelwert d₅₀) im Bereich von 0,05 bis 10 *µ*m, bevorzugt von 0,1 bis 5, insbesondere von 0,15 bis 3 *µ*m auf (bestimmt wie oben angegeben mittels Ultrazentrifuge).

Als Acrylatkautschuke kommen vor allem Polymere aus Acrylsäurealkylestern in Betracht, die bis zu 40 Gew.-%, bezogen auf das Gesamtgewicht des Acrylkautschuks, anderer copolymerisierbarer Monomerer enthalten können. Bevorzugt werden C₁- bis C₈-Alkylester, z.B. Methyl,-, Ethyl-, Butyl-, n-Octyl- und 2-Ethylhexylester oder Mischungen der genannten Ester. Besonders bevorzugt werden als Pfropfgrundlage vernetzte Acrylatkautschuke eingesetzt. Dem Fachmann sind Verfahren zu ihrer Herstellung geläufig. Ihre Teilchendurchmesser liegen im Allgemeinen im Bereich der für die EP(D)M Kautschuke genannten.

Bevorzugt werden als Pfropfgrundlage Acrylat- und Dienkautschuke.

Besonders bevorzugt werden als Pfropfkautschuke allerdings Dienkautschuke verwendet. Ganz besonders bevorzugt als Pfropfgrundlage sind Dienkautschuke, die aus
b11) 50 bis 100 Gew.-% mindestens eines Diens mit konjugierten Doppelbindungen und
b12) 0 bis 50 Gew.-% von einem oder mehreren weiteren monoethylenisch ungesättigten Monomeren,
aufgebaut sind, wobei sich die Gewichtsprozente von b11) und b12) zu 100 addieren.

Als Diene mit konjugierten Doppelbindungen, b11), kommen insbesondere Butadien, Isopren und deren halogensubstituierte Derivate, etwa Chloropren, in Betracht. Bevorzugt sind Butadien oder Isopren, insbesondere Butadien.

Bei den weiteren monoethylenisch ungesättigten Monomeren b12), die auf Kosten der Monomeren b11) im Dienkautschuk enthalten sein können, handelt es sich beispielsweise um:
vinylaromatische Monomere, bevorzugt Styrol oder Styrolderivate wie C₁- bis C₈-Alkylsubstituierte Styrole, wie α-Methylstyrol, p-Methylstyrol, Vinyltoluol;
ungesättigte Nitrile wie Acrylnitril, Methacrylnitril;
aliphatische Ester wie C₁- bis C₄-Alkylester der Methacrylsäure oder der Acrylsäure wie Methylmethacrylat, weiterhin auch die Glycidylester, Glycidylacrylat und - methacrylat;

N-substituierte Maleinimide wie N-Methyl-, N-Phenyl- und N-Cyclohexylmaleinimid; Säuren wie Acrylsäure, Methacrylsäure; weiterhin Dicarbonsäuren wie Maleinsäure, Fumarsäure und Itaconsäure sowie deren Anhydride wie Maleinsäureanhydrid; Stickstoff-funktionelle Monomere wie Dimethylaminoethylacrylat, Diethylaminoethylacrylat, Vinylimidazol, Vinylpyrrolidon, Vinylcaprolactam, Vinylcarbazol, Vinylanilin, Acrylamid und Methacrylamid;
aromatische und araliphatische Ester der (Meth)Acrylsäure und wie Phenylacrylat, Phenylmethacrylat, Benzylacrylat, Benzylmethacrylat, 2-Phenylethylacrylat, 2-Phenylethylmethacrylat, 2-Phenoxyethylacrylat und 2-Phenoxyethylmethacrylat; ungesättigte Ether wie Vinylmethylether oder Vinylbutylether.

Selbstverständlich kommen auch Mischungen aus zwei oder mehr dieser Monomeren in Betracht.

Bevorzugte Monomeren b12) sind Styrol, Acrylnitril, Methylmethacrylat, Glycidylacrylat, -methacrylat oder Butylacrylat.

Die Herstellung der Kautschuke ist dem Fachmann bekannt oder kann nach, dem Fachmann bekannten, Methoden erfolgen. So können beispielsweise die Dienkautschuke in einem ersten Schritt hergestellt werden, bei dem sie nicht partikelförmig anfallen, beispielsweise via Lösungspolymerisation oder Gasphasenpolymerisation und dann in einem zweiten Schritt in der wässrigen Phase dispergiert werden (Sekundäremulgierung). Für die Herstellung der Kautschuke werden heterogene, partikelbildende Polymerisationsverfahren bevorzugt. Diese Dispersionspolymerisation kann z.B. in an sich bekannter Weise nach der Methode der Emulsions-, der inversen Emulsions-, Miniemuisions-, Mikroemulsions-, oder Mikrosuspensionspolymerisation im Zulaufverfahren, kontinuierlich oder im Batchverfahren durchgeführt werden. Die Kautschuke können auch in Gegenwart eines vorgelegten feinteiligen Latex hergestellt werden (sog. "Saatlatex-Fahrweise" der Polymerisation). Geeignete Saatlatices bestehen beispielsweise aus Polybutadien oder Polystyrol. Grundsätzlich ist es möglich die Kautschuke nach ihrer Herstellung als Pfropfgrundlage zu verwenden. Sie können jedoch auch vor der Pfropfung zunächst durch Agglomerisationsverfahren zu größeren Teilchen agglomeriert werden.

Verfahren zur Agglomerisation sind dem Fachmann bekannt oder die Agglomerisation kann nach dem Fachmann an sich bekannten Methoden vorgenommen werden. So können physikalische Verfahren wie Gefrier- oder Druckagglomerisationsverfahren verwendet werden. Es können aber auch chemische Methoden eingesetzt werden, um die Primärteilchen zu agglomerisieren. Zu letzteren zählen die Zugabe von anorganischen oder organischen Säuren. Bevorzugt wird die Agglomerisation mittels eines Agglomerisationspolymerisates in Abwesenheit oder Gegenwart eines Elektrolyten, wie einem anorganischen Hydroxid, vorgenommen. Als Agglomerisationspoylmerisate sind beispielsweise Polyethylenoxidpolymere oder Polyvinylalkohole zu nennen. Zu den geeigneten Agglomerisationspolymerisaten zählen Copolymerisate aus C₁- bis C₁₂-Alkylacrylaten oder C₁- bis C₁₂- Alkylmethacrylaten und polaren Comonomeren wie Acrylamid, Methacrylamid, Ethacrylamid, n-Butylacrylamid oder Maleinsäureamid.

Bevorzugt weisen die Kautschuke Teilchengrößen (Gewichtsmittelwert d₅₀) im Bereich von 100 bis 2500 nm auf. Die Teilchengrößenverteilung ist bevorzugt nahezu oder völlig monomodal bzw. bimodal.

Die Pfropfcopolymeren enthalten eine Pfropfauflage auf der Basis eines ungesättigten Monomeren, worunter auch zu verstehen ist, dass die Pfropfauflage aus zwei oder mehr ungesättigten Monomeren hergestellt worden kann. Prinzipiell können die Kautschuke mit den unterschiedlichsten ungesättigten Verbindungen gepfropft werden. Entsprechende Verbindungen und Methoden sind dem Fachmann an sich bekannt. Bevorzugt wird eine Pfropfauflage enthaltend
b21) 50 bis 100, bevorzugt 60 bis 100 und besonders bevorzugt 65 bis 100 Gew.-% eines vinylaromatischen Monomeren,
b22) 0 bis 50, bevorzugt 0 bis 40 und besonders bevorzugt 0 bis 35 Gew.-% Acrylnitril oder Methacrylnitril oder deren Mischungen,
b23) 0 bis 40, bevorzugt 0 bis 30 und besonders bevorzugt 0 bis 20 Gew.-% von einem oder mehreren weiteren monoethylenisch ungesättigten Monomeren,
wobei sich die Anteile der Komponenten b21) bis b23) zu 100 Gew.-% ergänzen.

Als vinylaromatische Monomere kommen die unter b12) genannten vinylaromatischen Verbindungen oder Mischungen aus zwei oder mehren davon, insbesondere Styrol oder α-Methylstyrol, in Betracht. Zu den weiteren monoethylenisch ungesättigten Monomeren zählen die unter b12) aufgeführten aliphatischen, aromatischen und araliphatischen Ester, Säuren, stickstoff-funktionellen Monomere und ungesättigten Ether oder Mischungen dieser Monomeren.

In der Pfropfauflage können aber auch Monomere mit funktionellen Gruppen enthalten sein, worunter insbesondere Epoxy- oder Oxazolingruppen zu nennen sind.

Man kann die Pfropfauflage in einem oder mehreren Verfahrenschritten herstellen. Dabei können die Monomeren b21), b22) und b23) einzeln oder, in Mischung miteinander zugefügt werden. Das Monomerenverhältnis der Mischung kann zeitlich konstant oder ein Gradient sein. Auch Kombinationen dieser Verfahrensweisen sind möglich.

Beispielsweise kann man zunächst Styrol alleine, und danach eine Mischung aus Styrol und Acrylnitril, auf die Pfropfgrundlage polymerisieren.

Bevorzugte Pfropfauflagen sind beispielsweise aus Styrol und/oder α-Methyl-styrol und einem oder mehreren der unter b22) und b23) genannten anderen Monomeren. Bevorzugt sind dabei Methylmethacrylat, N-Phenylmaleinimid, Maleinsäureanhydrid und Acrylnitril, besonders bevorzugt Methylmethacrylat und Acrylnitril.

Bevorzugte Pfropfauflagen basieren auf:

| | |
|---|---|
| b2-1: | Styrol |
| b2-2: | Styrol und Acrylnitril, |
| b2-3: | α-Methylstyrol und Acrylnitril, |
| b2-4: | Styrol und Methylmethacrylat. |

Besonders bevorzugt beträgt der Anteil an Styrol oder α-Methylstyrol, oder der Anteil der Summe aus Styrol und α-Methylstyrol, mindestens 40 Gew.-%, bezogen auf die Pfropfauflage.

Weiterhin eignen sich wie bereits erwähnt auch Pfropfcopolymere mit mehreren "weichen" und "harten" Stufen, vor allem im Falle größerer Teilchen.

Bevorzugt werden Pfropfcopolymere, die (bezogen auf das Pfropfcopolymer)
b1) 30 bis 95, bevorzugt 40 bis 90, insbesondere 40 bis 85 Gew.-% einer Pfropfgrundlage (d.h. Kautschuk) und
b2) 5 bis 70, bevorzugt 10 bis 60, insbesondere 15 bis 60 Gew.-% einer Pfropfauflage
enthalten.

Als bevorzugte Pfropfcopolymere sind beispielsweise solche zu nennen, die (bezogen auf das Pfropfcopolmyer)
b1) 30 bis 95 Gew.-% einer Pfropfgrundlage, enthaltend (bezogen auf b1)) 100 Gew.-% Butadien
   und
b2) 5 bis 70 Gew.-% einer Pfropfauflage, enthaltend (bezogen auf b2)) von 65 bis 85 Gew.-% Styrol und von 15 bis 35 Gew.-% Acrylnitril
enthalten.

Als bevorzugte Pfropfcopolymere kommen des weiteren solche in Betracht, die (bezogen auf das Pfropfcopolmyer)
b1) 30 bis 95 Gew.-% einer Pfropfgrundlage, enthaltend (bezogen auf b1))
   von 50 bis 97 Gew.-% Butadien und
   von 3 bis 50 Gew.-% Styrol
   und
b2) 5 bis 70 Gew.-% einer Pfropfauflage, enthaltend (bezogen auf b2))
   von 65 bis 85 Gew.-% Styrol und
   von 15 bis 35 Gew.-% Acrylnitril enthalten.

Zu den bevorzugten Pfropfcopolymeren zählen z.B. auch solche, die (bezogen auf Pfropfcopolymer))
b1) 30 bis 95 Gew.-% einer Pfropfgrundlage, enthaltend n-Butylacrylat und einen Vernetzter
   und
b2) 5 bis 70 Gew.-% einer Pfropfauflage, enthaltend (bezogen auf Pfropfauflage)) von 65 bis 85 Gew.-% Styrol und von 15 bis 35 Gew.-% Acrylnitril
enthalten.

Im Allgemeinen wird die Pfropfung in Emulsion durchgeführt. Geeignete Verfahrensmaßnahmen sind dem Fachmann bekannt. Soweit bei der Pfropfung nicht gepfropfte Polymere aus den Monomeren b2) entstehen, werden diese Mengen, die in der Regel unter 10 Gew.-% von B) liegen, der Masse der Komponente D) zugeordnet.

Der Anteil der Komponente B) an den erfindungsgemäßen Formmassen kann in weiten Bereichen variieren. Bevorzugte erfindungsgemäße Formmassen enthalten die Komponente B) in Mengen von 4 bis 50, insbesondere von 6 bis 45 Gew.-%, bezogen auf das Gesamtgewicht der Formmasse. Besonders bevorzugte Formmassen enthalten von 8 bis 40 Gew.-%, bezogen auf das Gesamtgewicht der Formmasse an Komponente B).

### Komponente C)

Komponente C) enthält erfindungsgemäß ein kautschukfreies Copolymer. Hierunter ist auch zu verstehen, dass die Komponente C) eine Mischung aus zwei oder mehr dieser Copolymere umfassen kann.

Strukturell ist das Copolymere C) aus mindestens 30 Gew.-%, bezogen auf das Gesamtgewicht aller Einheiten, die C) enthält, Einheiten (c1) aufgebaut, die sich von vinylaromatischen Monomeren ableiten. Ansonsten ist der strukturelle Aufbau in weiten Grenzen variierbar und richtet sich vor allem danach, dass die Copolymere C) zumindest teilweise, bevorzugt überwiegend mit der Komponente B mischbar sein soll. Auch soll die Art und Menge der funktionellen Gruppen so beschaffen sein, dass eine Reaktion mit den Endgruppen der Polyamide A) stattfinden kann.

Nach einer der bevorzugten Ausführungsformen basieren die Copolymeren C auf einer vinylaromatischen Verbindung (c1) und enthalten als Einheiten (c2) Dicarbonsäureanhydride (c21) oder Dicarbonsäureimide (c22) oder Mischungen aus c21) und c22) und Einheiten (c3), die sich von weiteren Monomeren ableiten, die keine Gruppen enthalten, die mit den Endgruppen des Polyamides reagieren, oder nur um ein viel-faches langsamer.

Gemäß dieser Ausführungsform beträgt der Anteil der Einheiten c1) bevorzugt von 50 bis 85, insbesondere von 60 bis 80 Gew.-%. Ganz besonders bevorzugt enthalten die Copolymeren C) von 65 bis 78 Gew.-% Einheiten, die sich von aromatischen Vinylverbindungen ableiten. Die Gew.-% Angaben sind jeweils bezogen auf das Gesamtgewicht von c1) bis c3).

Der Anteil der Einheiten c21), die sich von α,β-ungesättigten Dicarbonsäureanhydriden ableiten, beträgt bevorzugt von 0,3 bis 25 Gew.-%. Copolymere C) mit wesentlich weniger als 0,3 Gew.-%, beispielsweise solche mit weniger als 0,1 Gew.-% der Einheiten c21) sind im Allgemeinen nicht hinreichend reaktionsfähig. Solche mit wesentlich mehr als 25 Gew.-% lassen sich meist nicht mehr gut verarbeiten, da sie zu stark vernetzend wirken. Bevorzugt enthalten die Copolymeren C) von 0,5 bis 15 Gew.-%, insbesondere von 0,7 bis 10 Gew.-%, ganz besonders bevorzugt von 0,8 bis 5 Gew-% c21), beispielsweise von 1 bis 3 Gew.-% c21). Die Gew.-% Angaben beziehen sich dabei jeweils auf das Gesamtgewicht der Einheiten c1) bis c3).

Anstelle der Einheiten c21) oder, wie es bevorzugt ist, darüber hinaus können die Copolymeren C) Einheiten c22) enthalten, die sich von α,β-ungesättigten, insbesondere cyclischen Dicarbonsäureimiden ableiten, Diese sind im allgemeinen von 0 bis 49,7 Gew.-% in den Copolymeren C) enthalten. Bevorzugte Copolymere C) enthalten von 0 bis 39,5 Gew.-% c22), insbesondere von 0 bis 34,2 Gew.-%, wobei sich die Gew.-% Angaben jeweils auf das Gesamtgewicht der Einheiten c1 bis c3) bezieht.

Enthalten die Copolymeren kein c22) können die Copolymere C) noch 14,7 bis 40 Gew.-%, bevorzugt 19,5 bis 35 Gew.-%, insbesondere 21,3 bis 33 Gew.-% Einheiten c3), bezogen auf das Gesamtgewicht der Einheiten c1) bis c3), enthalten, die sich von weiteren radikalisch polymerisierbaren Verbindungen ableiten.

Als aromatische Vinylverbindungen c1) kommen vor allem Styrol und Styrolderivate in Betracht. Zu den geeigneten Styrolderivaten zählen α-Methylstyrol oder am aromatischen Kern substituierte Styrolderivate wie Vinyltoluol, t-Butylstyrol oder Chlorstyrol. Selbstverständlich können auch Mischungen unterschiedlicher aromatischer Vinylverbindungen eingesetzt werden. Ganz besonders bevorzugt wird Styrol verwendet.

Zu den bevorzugten α,β-ungesättigten Dicarbonsäureanhydriden c21) zählen cyclische und zwar solche mit 2 bis 20 Kohlenstoffatomen. Die Doppelbindung kann sowohl exocyclisch als auch endocyclisch sein. Darunter sind Maleinsäureanhydrid, Methylmaleinsäureanhydrid oder Itakonsäureanhydrid besonders bevorzugt. Mischungen unterschiedlicher Dicarbonsäureanhydride können ebenfalls verwendet werden. Ganz besonders bevorzugt wird Maleinsäureanhydrid alleine eingesetzt.

Im allgemeinen entsprechen die α,β-ungesättigten Dicarbonsäureimide c22) den obengenannten Dicarbonsäureanhydriden. Der Substituent am Stickstoff ist in der Regel ein C₁-bis C₂₀-Alkyl, C₄-bis C₂₀-Cycloalkyl, C₁-bis C₁₀-Alkyl-C₆-bis C₁₈-Aryl oder ein C₆-bis C₁₈-Arylrest.

Die Alkylreste können sowohl linear als auch verzweigt sein und mit einem oder mehreren Sauerstoffatomen unterbrochen sein, wobei die Sauerstoffatome nicht direkt mit den Stickstoffatomen und nicht direkt mit einem anderen Sauerstoffatom verknüpft sind. Zu diesen Alkylresten zählen Methyl, Ethyl, n-Propyl, i-Propyl, n-Butyl, i-Butyl, t-Butyl, n-Hexyl, n-Decyl und n-Dodecyl. Die Cycloalkylreste können sowohl unsubstituiert als auch substituiert sein. Geeignete Substituenten sind z.B. stituiert als auch substituiert sein. Geeignete Substituenten sind z.B. Alkylgruppen wie Methyl oder Ethyl. Als Beispiele für Cycloalkylreste sind Cyclobutyl, Cyclopentyl, Cyclohexyl und p-Methylcyclohexyl zu nennen. Die Alkylgruppe der Alkylarylreste kann sowohl linear als auch verzweigt sein und die Alkylarylreste können auch Substituenten haben. Beispiele derartiger Substituenten sind Alkylgruppen wie Methyl oder Ethyl aber auch Halogenatome wie Chlor oder Brom. Als Alkylarylreste können beispielsweise Benzyl, Ethylphenyl oder p-Chlorbenzyl verwendet werden. Ebenso können die Arylreste substituiert oder unsubstituiert sein, wobei z.B. Alkylgruppen wie Methyl oder Ethyl oder Halogenatome wie Chlor oder Brom geeignete Substituenten sind. Zu den bevorzugten Arylresten zählen Phenyl und Naphthyl. Ganz besonders bevorzugte Reste sind Cyclohexyl oder Phenyl.

Beispielhaft für Einheiten c3) seien hier Acrylsäure und Acrylsäurederivate wie Methacrylsäure, Acrylsäurealkylester wie Acrylsäureethylester, Methacrylsäuremethylester, Methacrylsäureethylester oder Methyacrylsäurecyclohexylester oder ungesättigte Nitrile wie Acrylnitril, Methacrylnitril genannt. Mischungen dieser Monomeren kommen ebenfalls in Betracht. Ganz besonders bevorzugt wird Acrylnitril alleine verwendet.

Als bevorzugte Copolymeren C) dieser Ausführungsform sind beispielhaft die mit der folgenden Zusammensetzung genannt:
Copolymere, die
c1) von 50 bis 85 bevorzugt von 60 bis 81 Gew.-% Styrol,
c2) von 0,5 bis 10 bevorzugt von 1 bis 5 Gew.-% Maleinsäureanhydrid und
c3) von 14,5 bis 40 , bevorzugt von 18 bis 35 Gew.-% Acrylnitril
enthalten, wobei sich die Anteile von c1) bis c3) zu 100 Gew.-% addieren.

Die Copolymeren C) dieser Ausführungsform enthalten die Einheiten c1) bis c3) bevorzugt in einer statistischen Verteilung. In der Regel weisen die Copolymeren C) Molekulargewichte M_{w} (Gewichtsmittelwert) von 30 000 bis 500 000, bevorzugt 50 000 bis 250 000, insbesondere 70 000 bis 200 000 g/mol auf, bestimmt mittels GPC mit Tetrahydrofuran (THF) als Elutionsmittel und Polystyrol-Eichung.

Die Copolymeren C) dieser Ausführungsform lassen sich z.B. dadurch herstellen, dass man die entsprechenden Monomeren radikalisch polymerisiert. Dabei kann die Umsetzung sowohl in Suspension oder Emulsion als auch in Lösung oder Substanz durchgeführt werden, wobei letzteres bevorzugt wird. Die radikalische Reaktion lässt sich im allgemeinen mit den üblichen Methoden initiieren wie Licht oder bevorzugt mit Radikalstartern wie Peroxiden z.B. Benzoylperoxid. Auch die thermisch initiierte Polymerisation ist möglich.

Daneben können die Copolymeren C) dieser Ausführungsform auch dadurch hergestellt werden, dass zunächst die Komponenten c1), c21) und gegebenenfalls c3) miteinander in einer radikalischen Reaktion umgesetzt werden und anschließend die in dem Reaktionsprodukt enthaltenen Anhydridgruppen teilweise mit entsprechenden primären Aminen oder Ammoniak in Imidgruppen überführt werden, so dass die Einheiten c22) entstehen. Diese Reaktion wird in der Regel in Gegenwart eines tertiären Amins als Katalysator bei Temperaturen von 80 bis 350°C ausgeführt.

Gemäß einer anderen bevorzugten Ausführungsform enthalten die Copolymere C) anstelle der Einheiten c21) oder c22) oder deren Mischungen Einheiten (c23), die sich von einem ungesättigten Monomeren ableiten, das eine Epoxygruppe enthält. Die Einheiten c23) können auch auf einer Mischung aus zwei oder mehr unterschiedlichen Monomeren dieser Art basieren. Die Monomeren können eine oder auch zwei oder mehr Epoxygruppen aufweisen. Besonders bevorzugt wird Glycidylmethacrylat alleine verwendet.

Zu den bevorzugten Copolymeren C) dieser Ausführungsform zählen:
Copolymere, enthaltend
c1) von 65 bis 85, bevorzugt von 70 bis 80 Gew.-% Styrol,
c23) von 0,5 bis10, bevorzugt von 1 bis 5 Gew.% Glycidylmethacrylat und
c3) von 14,5 bis 34,5 Gew.-% , bevorzugt von 19 bis 29 Gew.-% Acrylnitril,
wobei sich die Anteile von c1) bis c3) zu 100 Gew.-% addieren.

Die Copolymeren C) dieser Ausführungsform können z.B. durch Suspensenspolymerisation in Polyvinylalkohol in Gegenwart eines peroxidischen Initiators hergestellt werden.

Die Copolymeren C) dieser Ausführungsform weisen in Regel Molekulargewichte (Gewichtsmittelwert Mw), im Bereich von 50 000 bis 1 000 000, bevorzugt von 70 000 bis 500 000 g/mol, bestimmt gemäß GPC mit THF als Elutionsmittel gegen Polystyrolstandard, auf.

In der Regel werden in den erfindungsgemäßen Formmassen von 0,95 bis 25, bevorzugt 1,4 bis 20 insbesondere 1,8 bis 15 Gew.-%, bezogen auf das Gesamtgewicht der Formmasse, an Komponente C) eingesetzt.

### Komponente D

Erfindungsgemäß ist Komponente D ein kautschukfreies Matrixpolymer, worunter auch Mischungen aus zwei oder mehr unterschiedlichen Matrixpolymeren verstanden werden. Bevorzugt wird der molekulare Aufbau des Matrixpolymeren so gewählt, dass das Matrixpolymer mit der Pfropfauflage verträglich ist. Bevorzugt entsprechen daher die Monomeren b2) denen des Matrixpolymeren. Allerdings enthalten die Matrixpolymere bevorzugt keine funktionellen Gruppen, die mit den Endgruppen der Polyamide reagieren können.

Als Matrixpolymer eignen sich z.B. amorphe Polymerisate. Beispielsweise kann es sich um SAN (Styrol-Acrylnitril)-, AMSAN (α-Methylstyrol-Acrylnitril)-, Styrol-Maleinimid-Maleinsäureanhydrid (SNPMIMA), (Styrol-Maleinsäure(anhydrid)-Acrylnitril-Polymerisate oder SMSA (Styrol-Maleinsäureanhydrid) handeln.

Vorzugsweise handelt es sich bei Komponente D um ein Copolymerisat aus
d1) 60 - 100 Gew.-%, vorzugsweise 65 - 80 Gew.-%, Einheiten eines vinylaromatischen Monomeren, vorzugsweise des Styrols, eines substituierten Styrols oder eines (Meth)acrylsäureesters oder deren Gemische, insbesondere des Styrols oder α-Methylstyrols oder deren Mischungen,
d2) 0 bis 40 Gew.-%, vorzugsweise 20 - 35 Gew.-%, Einheiten eines ethylenisch ungesättigten Monomers, vorzugsweise des Acrylnitrils oder Methacrylnitrils oder Methylmethacrylats, insbesondere des Acrylnitrils.

Gemäß einer Ausführungsform der Erfindung ist das Matrixpolymer dabei aus 60 - 99 Gew.-% vinylaromatischen Monomeren und 1 - 40 Gew.-% mindestens eines der anderen angegebenen Monomeren aufgebaut.

Gemäß einer Ausführungsform der Erfindung wird als Matrixpolymer ein Copolymerisat von Styrol und/oder α-Methylstyrol mit Acrylnitril verwendet. Der Acrylnitrilgehalt in diesen Copolymerisaten beträgt dabei 0 - 40 Gew.-%, vorzugsweise 18 - 35 Gew.-%, bezogen auf das Gesamtgewicht des Matrixpolmyeren.

Die Molekulargewichte (Gewichtsmittelwert M_{w}) liegen in der Regel im Bereich von 50 000 bis 500 000 g/mol, bevorzugt im Bereich von 70 000 bis 450 000 g/mol.

Die Matrixpolymeren sind an sich bekannt oder können nach dem Fachmann bekannten Methoden hergestellt werden.

Der Anteil der Komponente D) an den thermoplastischen Formmassen beträgt im Allgemeinen von 0 bis 50 Gew.-%, bevorzugt von 1 bis 45 Gew.-%, insbesondere von 1 bis 40 Gew.-%, bezogen auf das Gesamtgewicht der Formmasse.

### Komponente E)

Als weitere Komponente kann eine niedermolekulare Verbindung mitverwendet werden, die nur eine Dicarbonsäureanhydridgruppe aufweist. Es können aber auch zwei oder mehr dieser Verbindungen als Komponente E) verwendet werden. Diese Verbindungen können neben der Dicarbonsäureanhydridgruppe weitere funktionelle Gruppen enthalten, die mit den Endgruppen der Polyamide reagieren können. Geeignete Verbindungen E) sind z.B. C₄- bis C₁₀-Alkyldicarbonsäureanhydride, beispielsweise Bernsteinsäureanhydrid, Glutarsäureanhydrid, Adipinsäureanhydrid. Ferner kommen cycloaliphatische Dicarbonsäureanhydride wie 1,2-Cyclohexandicarbonsäureanhydrid in Betracht. Darüber hinaus können aber auch Dicarbonsäureanhydride, die ethylenisch ungesättigte oder aromatische Verbindungen sind, eingesetzt werden, z.B. Maleinsäureanhydrid, Phthalsäureanhydrid oder Trimellitsäureanhydrid.

Der Anteil der Komponente E) beträgt im Allgemeinen von 0 bis 3, bevorzugt von 0,001 bis 2 Gew.-%, bezogen auf das Gesamtgewicht der Komponenten A bis F.

### Komponente F)

Die Formmassen können Zusatzstoffe enthalten. Deren Anteil beträgt in der Regel von 0 bis 60, bevorzugt von 0 bis 50 Gew.-%, bezogen auf das Gesamtgewicht der Komponenten A bis F.

Als solche kommen z.B. teilchenförmige mineralische Füllstoffe in Betracht. Hierunter eignen sich amorphe Kieselsäure, Carbonate wie Magnesiumcarbonat (Kreide), gepulverter Quarz, Glimmer, unterschiedlichste Silikate wie Tone, Muskovit, Biotit, Suzoit, Zinnmaletit, Talkum, Chlorit, Phlogophit, Feldspat, Calciumsilikate wie Wollastonit oder Kaolin, besonders kalzinierter Kaolin.

Nach einer besonders bevorzugten Ausführungsform werden teilchenförmige Füllstoffe verwendet, von denen mindestens 95 Gew.-%, bevorzugt mindestens 98 Gew.-% der Teilchen einen Durchmesser (größte Ausdehnung), bestimmt am fertigen Produkt, von weniger als 45 *µ*m, bevorzugt weniger als 40 *µ*m aufweisen und deren sogenanntes Apektverhaltnis vorzugsweise im Bereich von 1 bis 25, bevorzugt im Bereich von 2 bis 20 liegt, bestimmt am fertigen Produkt, d.h. in der Regel einem Spritzgußformteil. Die Teilchendurchmesser können dabei z.B. dadurch bestimmt werden, dass elektronen-mikroskopische Aufnahmen von Dünnschnitten der Polymermischung aufgenommen und mindestens 25, bevorzugt mindestens 50 Füllstoffteilchen für die Auswertung herangezogen werden. Ebenso kann die Bestimmung der Teilchendurchmesser über Sedimentationsanalyse erfolgen, gemäß Transactions of ASAE, Seite 491 (1983). Der Gewichtsanteil der Füllstoffe, der weniger als 40 µm beträgt, kann auch mittels Siebanalyse gemessen werden. Das Aspektverhältnis ist das Verhältnis von Teilchendurchmesser zu Dicke (größter Ausdehnung zu kleinster Ausdehnung).

Besonders bevorzugt werden als teilchenförmige Füllstoffe Talkum, Kaolin, wie calcinierter Kaolin oder Wollastonit oder Mischungen aus zwei oder allen dieser Füllstoffe. Darunter wird Talkum mit einem Anteil von mindestens 95 Gew.-% an Teilchen mit einem Durchmesser von kleiner als 40 µm und einem Aspektverhältnis von 1,5 bis 25, jeweils bestimmt am fertigen Produkt, besonders bevorzugt. Kaolin hat bevorzugt einen Anteil von mindestens 95 Gew.-% an Teilchen mit einem Durchmesser von kleiner als 20 *µ*m und einem Aspektverhältnis von 1,2 bis 20, jeweils bestimmt am fertigen Produkt. Diese Füllstoffe können in Mengen von 0 bis zu 40 Gew.-%, bevorzugt bis 30 Gew.-%, bezogen auf das Gesamtgewicht von A bis F, eingesetzt werden.

Als Komponente F) können auch faserförmige Füllstoffe wie Kohlenstofffasern, Kaliumtitanat-Whisker, Aramidfasern oder bevorzugt Glasfasern eingesetzt werden, wobei mindestens 50 Gew.-% der faserförmigen Füllstoffe (Glasfasern) eine Länge von mehr als 50 µm aufweisen. Die verwendeten (Glas)fasern können vorzugsweise einen Durchmesser von bis zu 25 *µ*m, besonders bevorzugt 5 bis 13 *µ*m aufweisen. Vorzugsweise weisen mindestens 70 Gew.-% der Glasfasern eine Länge von mehr als 60 *µ*m auf. Besonders bevorzugt beträgt im fertigen Formteil die mittlere Länge der Glasfasern 0,08 bis 0,5 mm. Die Länge der Glasfasern bezieht sich auf ein fertiges Formteil, das beispielsweise nach dem Spritzgießen erhalten wird. Dabei können die Glasfasern den Formmassen bereits in der entsprechend langer Form oder auch in Form von Endlossträngen (Rovings) zugesetzt werden. Im Allgemeinen werden diese Fasern in Mengen von 0 bis 60, bevorzugt bis 50 Gew.-%, bezogen auf das Gesamtgewicht von A bis F eingesetzt.

Als Komponente F) können phosphorhaltige Flammschutzmittel eingesetzt werden. Beispiele sind Tri-(2,6- dimethylphenyl)phosphat, Triphenylphosphat, Tricresylphosphat, Diphenyl-2-ethyl-cresylphosphat, Diphenyl-cresylphosphat, Tri(isopropylphenyl)phosphat sowie Phosphorsäure-bis-phenyl-(4-phenyl)ester, Phosphorsäure-phenyl-bis- (4 - phenylphenyl)ester, Phosphorsäure-tris-(4-phenylphenyl)ester, Phosphorsäure-bis-phenyl(benzylphenyl)ester, Phosphorsäure-phenyl-bis-(benzylphenyl)ester, Phosphorsäure-tris-(benzylphenyl)ester, Phosphorsäure-phenyl-bis-[1-phenylethylphenyl]ester, Phosphorsäure-phenyl-bis-[1-methyl-1-phenylethylphenyl]ester und Phosphorsäure-phenyl-bis-[4-(1-phenethyl)-2,6-dimethylphenyl]ester. Sie können auch im Gemisch mit Triphenylphosphinoxid oder Tri-(2,6-dimethylphenyl) phosphinoxid eingesetzt werden.

Zudem sind als Flammschutzmittel Resorcinoldiphosphat und entsprechend höhere Oligomere, Hydrochinondiphosphat und entsprechende höhere Oligomere bevorzugt.

Die Flammschutzmittel werden in der Regel in Mengen von 0 bis 20, vorzugsweise 0 bis 17,5 Gew.-% eingesetzt. Bei Vorliegen werden sie bevorzugt in Mengen von 0,4 bis 10 Gew.-% eingesetzt. Die Mengenangaben sind jeweils bezogen auf das Gesamtgewicht von A bis F.

Als weitere Zusatzstoffe sind beispielsweise Verarbeitungshilfsmittel, Stabilisatoren und Oxidationsverzögerer, Mittel gegen Wärmezersetzung und Zersetzung durch ultraviolettes Licht, Gleit- und Entformungsmittel, Farbstoffe und Pigmente sowie Weichmacher zu nennen. Deren Anteil beträgt im allgemeinen 0 bis 45, vorzugsweise 0 bis 20, insbesondere 0 und sofern sie vorliegen von 0,2 bis 10 Gew.-%, bezogen auf das Gesamtgewicht von A bis F.

Pigmente und Farbstoffe sind allgemein in Mengen von 0 bis 4, bevorzugt 0 bis 3,5 und insbesondere 0 und sofern sie vorliegen von 0,5 bis 3 Gew.-%, bezogen auf das Gesamtgewicht von A bis F enthalten.

Die Pigmente zur Einfärbung von Thermoplasten sind allgemein bekannt. Als erste bevorzugte Gruppe von Pigmenten sind Weißpigmente zu nennen wie Zinkoxid, Zinksulfid, Bleiweiß (2PbCO₃·Pb(OH₂), Lithopone, Antimonweiß und Titandioxid. Von den beiden gebräuchlichsten Kristallmodifikationen (Rutil- und Anatas-Typ) des Titandioxids wird insbesondere die Rutilform zur Weißfärbung der erfindungsgemäßen Formmassen verwendet.

Schwarze Farbpigmente, die erfindungsgemäß eingesetzt werden können, sind Eisenoxidschwarz (Fe₃O₄) Spinellschwarz (Cu(Cr, Fe)₂O₄), Manganschwarz (Mischung aus Mangandioxid, Siliciumoxid und Eisenoxid), Kobaltschwarz und Antimonschwarz sowie besonders bevorzugt Ruß, der meist in Form von Furnace- oder Gasruß eingesetzt wird.

Selbstverständlich können zur Einstellung bestimmter Farbtöne anorganische Buntpigmente erfindungsgemäß eingesetzt werden. Weiterhin kann es von Vorteil sein, die genannten Pigmente bzw. Farbstoffe in Mischung einzusetzen, z.B. Ruß mit Kupferphthalocyaninen, da allgemein die Farbdispergierung im Thermoplasten erleichtert wird.

Oxidationsverzögerer und Wärmestabilisatoren, die den thermoplastischen Massen gemäß der Erfindung zugesetzt werden können, sind z.B. Halogenide von Metallen der Gruppe I des Periodensystems, z.B. Natrium-, Lithium-Halogenide, ggf. in Verbindung mit Kupfer-(I)-Halogeniden, z.B. Chloriden, Bromiden und Iodiden. Die Halogenide, insbesondere des Kupfers, können auch noch elektronenreiche p-Liganden enthalten. Als Beispiel für derartige Kupferkomplexe seien Cu-Halogenid-Komplexe mit z.B. Triphenylphosphin genannt. Weiterhin können Zinkfluorid und Zinkchlorid verwendet werden. Ferner sind sterisch gehinderte Phenole, Hydrochinone, substituierte Vertreter dieser Gruppe, sekundäre aromatische Amine, HALS, gegebenenfalls in Verbindung mit phosphorhaltigen Säuren bzw. deren Salze, und Mischungen dieser Verbindungen, vorzugsweise in Konzentrationen bis zu 2 Gew.-%, bezogen auf das Gesamtgewicht von A bis F, einsetzbar.

Beispiele für UV-Stabilisatoren sind verschiedene substituierte Resorcine, Salicylate, Benzotriazole und Benzophenone, die im allgemeinen in Mengen bis zu 2 Gew.-%, bezogen auf das Gesamtgewicht von A bis F eingesetzt werden.

Gleit- und Entformungsmittel, die in der Regel in Mengen bis zu 1 Gew.-%, bezogen auf das Gesamtgewicht von A bis F zugesetzt werden, sind Stearinsäure, Stearylalkohol, Stearinsäurealkylester und -amide sowie Ester des Pentaerythrits mit langkettigen Fettsäuren. Es können auch Salze des Calciums, Zinks oder Aluminiums der Sterainsäure sowie Dialkylketone, z.B. Distearylketon, eingesetzt werden. Weiterhin können auch Ethylenoxid-Propylenoxid-Copolymere als Gleit- und Entformungsmittel verwendet werden.

Es hat sich herausgestellt, dass durch Zugabe von Stearaten oder Silikonöl in Mengen von 0,3 bis 1,5 Gew.-%, bezogen auf das Gesamtgewicht der Formmassen, die Bildung von Fließlinien bei der Verarbeitung erheblich reduziert werden kann. Außerdem sind die Formteile aus den Formmassen, die diese Additive enthalten, besonders kratzfest. Bevorzugt werden für diesen Zweck die Stearate oder Silikonöl in Mengen im Bereich von 0,3 bis 1,3, insbesondere von 0,5 bis 1 Gew.-%, bezogen auf das Gesamtgewicht der Formmassen zugegeben.

Hierbei können z.B. die vorstehend genannten Salze der Stearinsäure verwendet werden. Es ist auch möglich, eine Mischung aus zwei oder mehr unterschiedlichen Salzen der Stearinsäure einzusetzen. Als Silikonöle kommen bevorzugt solche in Betracht, die sich von linearen Polysiloxanen ableiten. Besonders bevorzugt werden lineare Polydimethylsiloxane. Zu den besonders bevorzugten Silikonölen zählen solche mit einer Viskosität im Bereich von 20 bis 100 000, bevorzugt von 100 bis 60 000 mPas (dynamische Viskosität bei 25°C).

Es ist auch möglich, eine Mischung aus zwei oder mehr unterschiedlichen Silikonölen einzusetzen. Mischungen aus einem oder einer Mischung unterschiedlicher Stearate mit einem oder einer Mischung unterschiedlicher Silikonöle kommt ebenfalls in Betracht. Beispielsweise kann eine Mischung aus Calciumstearat mit Polydimethylsiloxan verwendet werden. Bevorzugt wird jedoch entweder ein Stearat oder ein Silikonöl alleine eingesetzt. Als besonders bevorzugtes Stearat wird Calciumstearat und als besonders bevorzugtes Silikonöl wird Polydimethylsiloxan eingesetzt. Als ganz besonders vorteilhaft hat es sich erwiesen, Calciumstearat alleine zu verwenden.

Das Stearat bzw. das Silikonöl oder deren Mischungen können auf unterschiedlichste Weise in die Formmassen eingebracht werden. Beispielsweise können sie getrennt oder in Mischung zudosiert werden. Dabei ist es z.B. möglich, diese Additive zusammen mit den anderen Komponenten oder nach Zugabe einzelner der übrigen Komponenten zuzugeben und mit diesen zu vermischen. Es ist aber auch möglich, diese Additive z.B. erst zu den granulierten Formmassen zuzugeben und diese auf die Oberfläche der Granulate aufzubringen.

Die Herstellung der erfindungsgemäßen thermoplastischen Formmassen kann nach an sich bekannten Verfahren durch Mischen der Komponente A) mit den Komponenten B) und C) sowie falls vorhanden den Komponenten D) bis F) erfolgen. Dabei können alle Komponenten gemeinsam miteinander gemischt werden. Es kann aber auch vorteilhaft sein, einzelne Komponenten vorzumischen. Auch das Mischen der Komponenten in Lösung unter Entfernen der Lösungsmittel ist möglich, allerdings weniger bevorzugt.

Erfindungsgemäß ist es nach einer der Ausführungsformen bevorzugt, die Komponente C) und eine Teilmenge der Komponente A) in Form ihrer Granulate vorzumischen und anschließend gemeinsam aufzuschmelzen und zu Pfropfcopolymeren P) umzusetzen. Hierzu kann die Mischung unterschiedlicher Copolymeren C) verwendet werden oder aber auch nur ein Copolymer C). Im Prinzip können die Granulate durch unterschiedlichste Methoden miteinander gemischt werden, beispielsweise per Hand, Flügetradmischer, Fluidmischer, Röhnradmischer. Besonders bevorzugt werden die Granulate bei Raumtemperatur mittels eines Flügelradmischers und innerhalb von 1-5 Minuten miteinander vermischt.

Als Schmelzaggregat kommen beispielsweise Maxwell-Mischer, Banbury-Mischer, Kneter, Buss-Co-Kneter, Farrell-Kneter oder ein-, zwei oder mehrwellige Extruder wie Ring- oder Planetwalzenextruder in Betracht.

Bei den Zweiwellen-Extrudern können solche mit gleichsinnig drehenden oder solche mit gegenläufig drehenden Wellen eingesetzt werden, wobei die gleichsinnig drehenden, kämmenden besonders bevorzugt sind. Die bevorzugt eingesetzten gleichsinnig drehenden Zweiwellen-Extruder sind in der Regel ausgestattet mit mindestens einer Einzugszone, die mit fördernden Schneckenelementen versehen ist, mindestens einer Aufschmelzzone, versehen mit knetenden und rückfördernden Elementen, mindestens einer Mischzone mit fördernden, rückfördernden und knetenden Elementen. Dabei ist es möglich, dass auch spezielle Mischelemente zum Einsatz kommen, beispielsweise Zahnmischelemente, Schmelzmischelemente oder Turbinenmischelemente. Bevorzugt enthalten die Extruder je eine Einzugszone, Aufschmelzzone und Mischzone. Darüber hinaus weisen die bevorzugten Extruder meist eine, zwei oder mehr Entgasungszonen auf. Besonders bevorzugt schließen diese sich an die (letzte) Mischzone an. Die Entgasungszonen können unter Normaldruck, Überdruck oder Vakuum betrieben werden. Bevorzugt werden die Entgasungszonen unter Normaldruck oder Vakuum betrieben. Besonders bevorzugt werden die Entgasungszonen unter einem Vakuum von 10 bis 900 mbar, bevorzugt 20 bis 800 mbar, insbesondere 30 bis 600mbar betrieben. Anschließend an die Entgasungszone bzw. -Zonen weisen die bevorzugten Extruder im Allgemeinen eine Austragszone auf und eine Granuliereinheit. Letztere kann z.B. eine Stranggranulierung, Unterwassergranulierung oder Wasserringgranulierung sein, wobei Strang- und Unterwassergranulierung bevorzugt werden. Selbstverständlich kann die Austragszone auch anstelle dessen eine Spritzgusseinheit sein.

Im Allgemeinen liegt die Temperatur bei der Herstellung der Pfropfcopolymere P) im Schmelzeverfahren im Bereich von 200 bis 350 °C, bevorzugt im Bereich von 220 bis 340 °C.

Wird die Gesamtmenge der Komponente C) mit einer Teilmenge der Komponente A) zu den Pfropfcopolymeren P) umgesetzt, kann die Menge an Komponente A) in weiten Bereichen variieren. Die eingesetzte Teilmenge an A) sollte jedoch so bemessen sein, dass einerseits eine hinreichende Menge an Pfropfcopolymeren P) gebildet wird, andererseits nicht ein großer Überschuss an Polyamid neben dem Pfropfcopolymeren P) besteht. Die Pfropfcopolymeren P) können von 5 bis 95 Gew.-%, bevorzugt von 10 bis 90 Gew.-% an Copolymer C) und von 5 bis 95 Gew.-%, bevorzugt von 10 bis 90 Gew.-% an Polyamid A) enthalten. Besonders bevorzugt wird die Menge an Polyamid so bemessen, dass das molare Verhältnis der funktionellen Gruppen der Komponente C) zu den Endgruppen des Polyamids von 0,8 : 1 bis 1,3 : 1 beträgt. Bevorzugt beträgt es von 0,9 : 1 bis 1,3 : 1.

Die so hergestellten Pfropfcopolymeren P) können mit der Restmenge der Komponente A) sowie sofern vorhanden mit den anderen Komponenten gemischt werden. Das Mischen der beispielsweise trockenen Komponenten kann nach allen bekannten Methoden erfolgen. Vorzugsweise geschieht das Mischen bei Temperaturen von 200 bis 320°C durch gemeinsames Extrudieren, Kneten oder Verwalzen der Komponenten, wobei die Komponenten gegebenenfalls zuvor aus der bei der Polymerisation erhaltenen Lösung oder aus der wässrigen Dispersion isoliert worden sind.

Die erfindungsgemäßen thermoplastischen Formmassen können nach den bekannten Verfahren der Thermoplastverarbeitung verarbeitet werden, beispielsweise durch Extrudieren, Spritzgießen, Kalandrieren, Hohlkörperblasen oder Sintern.

Die erfindungsgemäßen Formmassen können zur Herstellung von Folien, Fasern, Formkörpern oder Schäumen eingesetzt werden. Zudem können sie besonders bevorzugt zur Herstellung von Fahrzeuginnenteilen verarbeit werden. Nach einer der bevorzugten Ausführungsformen können die erfindungsgemäßen thermoplastischen Formmassen als Substratmaterial dienen, dessen Oberfläche ganz oder teilweise metallisiert ist.

### Beispiele

Die Viskositätszahl der Polyamide wurde nach DIN 53 727 an 0,5 gew.%-igen Lösungen in 96 Gew.-% Schwefelsäure bei 23°C ermittelt.

Die Viskositätszahl des Terpolymeren sowie des Styrol-Acrylnitril-Copolymeren (SAN) wurde in Dimethylformamid bei 25°C an 0,5 gew.-%igen Lösungen bestimmt.

Die Teilchengröße der Pfropfkautschuke ist der Gewichtsmittelwert d₅₀, bestimmt gemäß W. Scholtan und H. Lange, Kolloid-Z. und Z.-Polymere 250 (1972), Seiten 782-796, mittels analytischer Ultrazentrifuge.

Die Wärmeformbeständigkeit der Proben wurde mittels der Vicat-Erweichungstemperatur bestimmt. Die Vicat-Erweichungstemperatur wurde nach DIN 53 460, mit einer Kraft von 49,05 N und einer Temperatursteigerung von 50 K je Stunde, an Normkleinstäben ermittelt.

Die Kerbschlagzähigkeit (ak) der Produkte wurde an ISO-Stäben nach ISO 179 1 eA bestimmt.

Die Fließfähigkeit (melt volume index, MVI) wurde nach ISO 1133 bei 240°C und 5 kg Belastung bestimmt.

Die Schmelzeviskosität wurde in einem Kapillarrheometer bei einer Temperatur von 290 °C und einer Scherrate von 55 Hz bestimmt. Zur Charakterisierung der Verarbeitungsstabilität wurde die Schmelzeviskosität nach 4 bzw. 24 Minuten Verweilzeit im Kapillarrheometer bei diesen Bedingungen bestimmt. In der Tabelle wird die Änderung während der Verweilzeit, bezogen auf den bei 4 Minuten gemessenen Wert angegeben.

Die Reibungseigenschaften wurden nach ISO 8925, 199E(E) an Platten der jeweiligen Formmasse bestimmt. Als Messgröße (ΔC_{F}), die mit der Quietschneigung von Kunststoffteilen korreliert, wurde die Differenz der Reibungskoffezienten im sogenannten "stick/slip" Bereich verwendet.

### Komponente A₁

Als Polyamid A2₁ wurde ein Polyamid 6, erhalten aus ε-Caprolactam, mit einer Viskositätszahl von 150 ml/g verwendet.

### Komponente A₂

Als Polyamid A2₁ wurde ein Polyamid 6, erhalten aus ε-Caprolactam, mit einer Viskositätszahl von 125 ml/g verwendet.

### Komponente B₁

Pfropfkautschuk mit 62 Gew.-% Polybutadien im Kern und 38 Gew.-% einer Pfropfhülle aus 75 Gew.-% Styrol und 25 Gew.-% Acrylnitril. Teilchengröße ca. 400 nm.

### Komponente B₂

Pfropfkautschuk mit 70 Gew.-% Polybutadien im Kern und 30 Gew.-% einer Pfropfhülle aus 75 Gew.-% Styrol und 25 Gew.-% Acrylnitril. Teilchengröße ca. 370 nm.

### Komponente B₃

Pfropfkautschuk mit 85 Gew.-% Polybutadien im Kern und 15 Gew.-% einer Pfropfhülle aus 75 Gew.-% Styrol und 25 Gew.-% Acrylnitril. Teilchengröße ca. 390 nm.

### Komponente B₄

Pfropfkautschuk mit 66 Gew.-% Polybutadien im Kern und 34 Gew.-% einer Pfropfhülle aus 75 Gew.-% Styrol und 25 Gew.-% Acrylnitril. Teilchengröße ca. 375 nm.

### Komponente C₁

Styrol-Acrylnitril-Maleinsäureanhydrid-Terpolymer, welches eine Zusammensetzung von 74/23,5/2,5 (Gew.-%) hatte, Viskositätszahl: 80 ml/g

### Komponente D₁

Styrol-Acrylnitril-Copolymer mit 75 Gew.-% Styrol und 25 Gew.-% Acrylnitril und einer Viskositätszahl von 80 ml/g

### Komponente E₁

Phthalsäureanhydrid

### Herstellung der Formmassen

Die Komponenten wurden in einem Zweiwellenextruder bei einer Massetemperatur von 240 bis 260°C gemischt. Die Schmelze wurde durch ein Wasserbad geleitet und granuliert.

Die Ergebnisse der Prüfungen sind in Tabelle 1 aufgeführt.

**Tabelle 1**

| Zusammensetzung | Formmasse | | | | | | |
|---|---|---|---|---|---|---|---|
| | V1 | V2 | 3 | 4 | 5 | V3 | 6 |
| A1 | 40,8 | - | 40,8 | 40,8 | 40,8 | 40,8 | 40,8 |
| A2 | - | 41 | - | - | - | - | - |
| B1 | 35 | 35 | 32 | 33 | 20 | 27 | - |
| B2 | - | - | 3 | - | - | - | - |
| B3 | - | - | - | 2 | - | - | 20 |
| B4 | - | - | - | | 15 | - | 7 |
| C1 | 5 | 5 | 5 | 5 | 5 | 5 | 5 |
| D1 | 19 | 19 | 19 | 19 | 19 | 27 | 27 |
| E1 | 0,2 | 0,2 | 0,2 | 0,2 | 0,2 | 0,2 | 0,2 |
| Eigenschaften | | | | | | | |
| Δ Kautschukanteil [Gew.-%] | - | - | 8 | 23 | 21 | - | 21 |
| Vicat B [°C] | 105 | 104 | 105 | 106 | 105 | 108 | 105 |
| ak, RT [kJ/m²] | 51 | 24 | 64 | 66 | 52 | 21 | 63 |
| ak, 130°C [kJ/m²] | 15 | 11 | 18 | 19 | 14 | 9 | 17 |
| MVI [ml/10] | 5,2 | 10,1 | 7,9 | 8,1 | 6,2 | 11,8 | 7,2 |
| MVI-Änderung [%] | -51 | -43 | -12 | -10 | -39 | -34 | -14 |
| ΔC_{F} | 0,05 | 0,05 | 0,04 | 0,04 | 0,02 | 0,06 | 0,03 |

## Patentansprüche

1. Thermoplastische Formmassen aus
A) einem Polyamid mit Amino- oder Carboxylendgruppen oder einer Mischung dieser Endgruppen,
B) einer Mischung aus mindestens zwei Pfropfcopolymeren, jeweils enthaltend einen Kautschuk als Pfropfgrundlage und eine Pfropfauflage auf der Basis eines ungesättigten Monomeren, die sich in ihren Kautschukgehalten um mindestens 5 Gew.-% voneinander unterscheiden,
C) ein kautschukfreies Copolymer enthaltend,
c1) mindestens 30 Gew.-% Einheiten, die sich von einem vinylaromatischen Monomeren ableiten, bezogen auf das Gesamtgewicht aller Einheiten, die C) enthält,
c2) Einheiten, die sich von einem Monomeren ableiten, das eine funktionelle Gruppe enthält, die mit den Endgruppen des Polyamides A) reagieren kann und
c3) Einheiten, die sich von einem Monomeren ableiten, das keine funktionellen Gruppen enthält, die mit den Endgruppen des Polyamides A) reagieren,
sowie darüber hinaus gewünschtenfalls
D) ein kautschukfreies Matrixpolymer,
E) eine niedermolekulare Verbindung, die eine Dicarbonsäureanhydridgruppe enthält und
F) einen oder eine Mischung unterschiedlicher Zusatzstoffe.

2. Thermoplastische Formmassen nach Anspruch 1 worin die Pfropfcopolymeren jeweils ein ABS sind.

3. Thermoplastische Formmassen nach den Ansprüchen 1 bis 2, worin Komponente A) Nylon 6 ist.

4. Thermoplastische Formmassen nach den Ansprüchen 1 bis 3, worin die Komponente C) ein Terpolymer aus Styrol, Maleinsäureanhydrid und Acrylnitril ist.

5. Thermoplastische Formmassen nach den Ansprüchen 1 bis 4, worin die Komponente F) ein Stearat oder ein Silikonöl oder eine Mischung davon enthält.

6. Verfahren zur Herstellung von thermoplastischen Formmassen gemäß den Ansprüchen 1 bis 5, **dadurch gekennzeichnet, dass** man in einem ersten Schritt aus einer Teilmenge der Komponente A) und der Gesamtmenge der Komponente B) Pfropfcopolymere P) herstellt und in einem zweiten Schritt die Pfropfcopolymere P) mit den anderen Komponenten und der Restmenge der Komponente A) mischt.

7. Verwendung der thermoplastischen Formmassen gemäß den Ansprüchen 1 bis 5 oder hergestellt gemäß Anspruch 6 zur Herstellung von Formteilen, Folien, Fasern oder Schäumen.

8. Verwendung nach Anspruch 7 zur Herstellung von Formteilen, Folien oder Fasern mit verbesserten Reibungseigenschaften.

9. Formteile, Folien, Fasern oder Schäume, erhältlich unter Verwendung von thermoplastischen Formmassen gemäß den Ansprüchen 1 bis 5 oder hergestellt gemäß Anspruch 6.

10. Formteile nach Anspruch 9, deren Δ C_{F}-Wert weniger als 0,05, gemessen nach ISO 8925, 199E (E), beträgt.

11. Fahrzeuginnenteile, erhältlich unter Verwendung von Formteilen, Folien, Fasern oder Schäumen nach Anspruch 9.

## Claims

1. A thermoplastic molding composition composed of
A) a polyamide having amino or carboxy end groups or a mixture of these end groups,
B) a mixture composed of at least two graft copolymers, each comprising a rubber as graft base and a graft based on an unsaturated monomer, where these differ by at least 5% by weight from one another in their rubber contents,
C) a rubber-free copolymer, comprising
c1) at least 30% by weight, based on the total weight of all of the units present in C), of units which derive from a vinylaromatic monomer,
c2) units which derive from a monomer which comprises a functional group which can react with the end groups of the polyamide A), and
c3) units which derive from a monomer which comprises no functional groups which react with the end groups of the polyamide A),
and also moreover, if desired,
D) a rubber-free matrix polymer,
E) a low-molecular-weight compound which comprises a dicarboxylic anhydride group, and
F) an additive, or a mixture of various additives.

2. The thermoplastic molding composition according to claim 1 in which each of the graft copolymers is an ABS.

3. The thermoplastic molding composition according to claims 1 to 2, in which component A) is nylon-6.

4. The thermoplastic molding composition according to claims 1 to 3, in which component C) is a terpolymer composed of styrene, maleic anhydride, and acrylonitrile.

5. The thermoplastic molding composition according to claims 1 to 4, in which component F) comprises a stearate or a silicone oil or a mixture thereof.

6. A process for preparing thermoplastic molding compositions according to claims 1 to 5, which comprises, in a first step, preparing a graft copolymer P) from a portion of component A) and from the entire amount of component B), and, in a second step, mixing the graft copolymer P) with the other components and with the remainder of component A).

7. The use of the thermoplastic molding compositions according to claims 1 to 5, or prepared according to claim 6, for producing moldings, films, fibers or foams.

8. The use according to claim 7 for producing moldings, films or fibers with improved frictional properties.

9. A molding, film, fiber or foam, obtainable using thermoplastic molding compositions according to claims 1 to 5, or prepared according to claim 6.

10. A molding according to claim 9, whose Δ C_{F} value is less than 0.05, measured to ISO 8925, 199E (E).

11. Motor-vehicle-interior parts, obtainable using moldings, films, fibers, or foams according to claim 9.

## Revendications

1. Masses de moulage thermoplastiques à base
A) d'un polyamide comportant des groupes terminaux amino ou carboxyle ou un mélange de ces groupes terminaux,
B) d'un mélange d'au moins deux copolymères de greffage, qui contiennent chacun un caoutchouc comme base de greffage et une enveloppe de greffage à base d'un monomère insaturé et qui se différencient l'un de l'autre dans leurs teneurs en caoutchouc d'au moins 5 % en poids,
C) d'un copolymère exempt de caoutchouc contenant
c1) au moins 30 % en poids d'unités qui dérivent d'un monomère vinylaromatique, par rapport au poids total de toutes les unités que C) contient,
c2) des unités qui dérivent d'un monomère qui contient un groupe fonctionnel qui peut réagir avec les groupes terminaux du polyamide A), et
c3) des unités qui dérivent d'un monomère qui ne contient pas de groupes fonctionnels qui réagissent avec les groupes terminaux du polyamide A),
ainsi qu'éventuellement en outre
D) d'un polymère de matrice exempt de caoutchouc,
E) d'un composé de faible poids moléculaire qui contient un groupe anhydride d'acide dicarboxylique, et
F) d'un additif ou d'un mélange d'additifs différents.

2. Masses de moulage thermoplastiques suivant la revendication 1, dans lesquelles les copolymères de greffage sont respectivement un ABS.

3. Masses de moulage thermoplastiques suivant les revendications 1 et 2, dans lesquelles le composant A) est du Nylon 6.

4. Masses de moulage thermoplastiques suivant les revendications 1 à 3, dans lesquelles le composant C) est un terpolymère de styrène, d'anhydride maléique et d'acrylonitrile.

5. Masses de moulage thermoplastiques suivant les revendications 1 à 4, dans lesquelles le composant F) contient un stéarate ou une huile de silicone ou un de leurs mélanges.

6. Procédé de préparation de masses de moulage thermoplastiques suivant les revendications 1 à 5, **caractérisé en ce que**, dans une première étape, on prépare des copolymères de greffage P) à partir d'une quantité partielle du composant A) et de la quantité totale du composant B) et, dans une deuxième étape, on mélange les copolymères de greffage P) avec les autres composants et la quantité résiduelle du composant A).

7. Utilisation des masses de moulage thermoplastiques suivant les revendications 1 à 5 ou préparées selon la revendication 6, pour la fabrication de pièces moulées, de feuilles, de fibres ou de mousses.

8. Utilisation suivant la revendication 7, pour la préparation de pièces moulées, de feuilles ou de fibres présentant des propriétés de frottement améliorées.

9. Pièces moulées, feuilles, fibres ou mousses, que l'on peut obtenir par utilisation de masses de moulage thermoplastiques suivant les revendications 1 à 5 ou préparées selon la revendication 6.

10. Pièces moulées suivant la revendication 9, dont la valeur Δ C_{F} est inférieure à 0,05, mesurée selon la norme ISO 8925, 199E (E).

11. Pièces internes de véhicule, que l'on peut obtenir par utilisation de pièces moulées, de feuilles, de fibres ou de mousses suivant la revendication 9.
